# EUROPEAN PATENT SPECIFICATION

(11) **EP 0 676 920 B1**
(45) Date of publication and mention of the grant of the patent: **16.12.1998**
(21) Application number: 94901287.6
(22) Date of filing: 03.11.1993
(51) Int. Cl.: A23B 7/00, B65D 51/16, A23L 3/3418, A23B 7/148, B65D 81/24

(54) **CONTROLLED ATMOSPHERE CONTAINER FOR RESPIRING PRODUCE AND METHOD OF RETARDING MATURATION OF PACKAGED RESPIRING PRODUCE**
VERPACKUNG MIT KONTROLLIERTER ATMOSPHÄRE FÜR ATMENDE PRODUKTE UND METHODE ZUR VERZÖGERUNG DER REIFUNG SOLCHER PRODUKTE
EMBALLAGE EN ATMOSPHERE CONTROLEE POUR PRODUITS RESPIRANTS ET METHODE POUR REDARDER LA MATURATION DESDITS PRODUITS

(43) Date of publication of application: 18.10.1995
(73) Proprietor: FRESH WESTERN MARKETING, INC., Salinas, CA 93901 (US)
(72) Inventor: VARRIANO-MARSTON, Elizabeth, Wilmington, DE 19810 (US); THOMAS, Eugene P., Aptos, CA 95003 (US); ANTOON, Mitchell K., Jr., Raleigh, NC 27606 (US)
(74) Representative: Hanna, Peter William Derek
(86) International application number: US9310669
(87) International publication number: WO9412040

(56) References cited:
- EP-A- 0 270 764
- WO-A-90/08474
- WO-A-92/04235
- FR-A- 1 567 996
- US-A- 4 769 262
- US-A- 4 842 875
- US-A- 4 910 032
- US-A- 4 910 032
- US-A- 4 939 030
- US-A- 4 939 030
- US-A- 5 045 331
- US-A- 5 165 947

## Description

### TECHNICAL FIELD

This invention relates to the field of packaging for respiring items such as fresh fruits and vegetables and more particularly to a container including a coated porous membrane for use in controlling the flow of oxygen and carbon dioxide into and/or out of the produce container.

### BACKGROUND ART

It is well-known that the eating qualifies and/or appearance of respiring items such as fresh fruits, vegetables and flowers (hereinafter "produce") can be preserved by controlling the atmosphere inside of the package that holds the produce. For example, U.S. Pat. No. 4,842,875, issued to H. Anderson on June 27, 1989, describes a basic approach that involves controlling the flow of oxygen and carbon dioxide into and out of the container that holds the produce. The container, called a "controlled atmosphere package," is comprised of a substantially gas-impermeable package having one or more panels made of a microporous plastic membrane having an oxygen permance in the rage of 77,500 to 465,000,000 cc/m²-atmosphere-day. By varying the permeance and/or size of the panel, various optimized oxygen and carbon dioxide levels inside the package can be maintained for extended periods of time thereby providing a method for retarding the maturation processes of various produce commodities.

U.S. Pat. No. 4,923,703, issued to M. Antoon on May 8, 1990, describes a microporous film for use as a panel in a controlled atmosphere package, comprised of a uniaxially oriented polyolefin film with an inert filler.

U.S. Pat. No. 4,910,032, issued to M. Antoon on March 20, 1990, describes a controlled atmosphere package, having a first membrane comprised of a uniaxially or biaxially oriented polymer film that is permeable to oxygen and carbon dioxide, and a second membrane that is permeable to water but impermeable to oxygen and carbon dioxide.

U.S. Pat. No. 4,879,078, issued to M. Antoon on November 7, 1989, and U.S. Pat. No. 4,923,650, issued to M. Antoon on May 8, 1990 describe methods for preparing microporous films that can be used in controlled atmosphere packaging for produce.

Additional patents that deal with this field include U.S. Pat. No. 4,939,030, issued to S. Tsuji et al. on July 3, 1990, which discloses a three-layer film, including a vinyl acetate layer, for use in produce packaging; and U.S. Pat. No. 4,996,071, issued to L. Bell on February 26, 1991, which discloses varying the surface area of the film to control the atmosphere inside of a produce package.

Additional patents dealing with this field but which are not considered to be material to the present invention include U.S. Pat. No. 3,625,876, issued to C. Fitko on December 7, 1971; U.S. Pat. No. 4,769,262, issued to A. Ferrar et al. on September 6, 1988; and US. Pat. No. 5,026,591, issued to R. Henn et al. on June 25, 1991.

Antoon (US 5,045,331) discloses a container for controlled atmosphere packaging comprising a container constructed of a substantially gas impermeable material. The container includes a permeable control panel of nonwoven material which is coated with a water resistant resin. When produce is placed inside the container, the panel provides dynamic control of the atmosphere in the container to improve retention of product freshness. Control of the atmosphere within the container is achieved by proper sizing of the permeable control panel relative to the mass of produce, the free gas space within the filled container, the respiration rate of the produce, and the permeability characteristics of the container and the panel (see page 4 line 63).

Magnen (US 3,507,667/FR 1,567,996) discloses a bag for construction of a substantially gas-impermeable material. The bag includes semipermeable window comprising a silicon elastomer film in which a fabric is embedded. Control of the atmosphere is achieved by sizing the window per unit of useful volume of the bag (see page 2 lines 2 - 8).

All of this prior art teaches that in order to establish and maintain different oxygen/carbon dioxide ratios inside of the package, either the permeance of the microporous membrane must be changed by altering the chemical formulation of the film used to make the membrane, or the size of the membrane panel must be changed.

### DISCLOSURE OF INVENTION

The present invention comprises a container for retarding the maturation of respiring produce, as defined by claim 1, which follows. A coated porous membrane panel is positioned in contact with, and over a hole in, a substantially non-porous container for providing an area through which a limited volume of carbon dioxide and oxygen can flow at a rate (permeance) between the inside of the container and the outside ambient atmosphere which is within a range specific to the type and amount of produce in the package. The combination of the non-porous container and the coated porous membrane panel retards the maturation of the produce by allowing the concentration of oxygen and carbon dioxide inside the container to be maintained within a range of concentration reasonably optimal for the type and amount of produce within the package. The coated porous membrane panel of the present invention may be comprised of a base substrate such as polypropylene or polyethylene, a nonwoven substrate made from these polymers, or paper (hereinafter "substrate") which has a permeance rate to oxygen and carbon dioxide in a range of, for example, 77,500 to 465,000,000 cc/m²-atmosphere-day (5,000 to 30,000,000 cc/100 in²-atmosphere-day). This range is then reduced to a desired level suitable for the type and amount of produce to be packaged by applying to said substrate a coating of a porosity-reducing, film-forming substance, such as an acrylic-based polymer which by pattern of application and optionally coat weight (thickness), decreases the permeance rate of the substrate to a desired range of permeance rates. The percent reduction in the oxygen and carbon dioxide permeance rate of the substrate can be varied 15 percent to almost 100 percent by varying the aforementioned characteristics of the coating applied to it.

The coated porous membrane panel of the present invention differs from the porous membrane panel described in the prior art (e.g., by Antoon in U.S. Pat. No. 4,879,078) in that the prior art varies the constituents of the membrane material to produce membranes of varying permeances, whereas in the present invention, a single substrate can be used to produce difference membranes for different types and/or amounts of produce by simply varying the characteristics of a porosity-reducing coating material applied to the single substrate.

### BRIEF DESCRIPTION OF DRAWINGS

For fuller understanding of the present invention, reference is made to the accompanying drawing in the following description.

In the drawing:
Figure 1 is a schematic cross-sectional representation of a coated membrane according to the present invention.
Figure 2 is a top view of a membrane having the coating applied in a triangular pattern.
Figure 3 is a top view of a membrane having the coating applied as a solid pattern.
Figure 4 is a cross-sectional view of a container according to the present invention.
Figure 5 is a schematic cross-sectional representation of a coated membrane having an ink layer and an adhesive layer.

Reference numbers refer to the same or equivalent parts of the present invention throughout the several figures of the drawing.

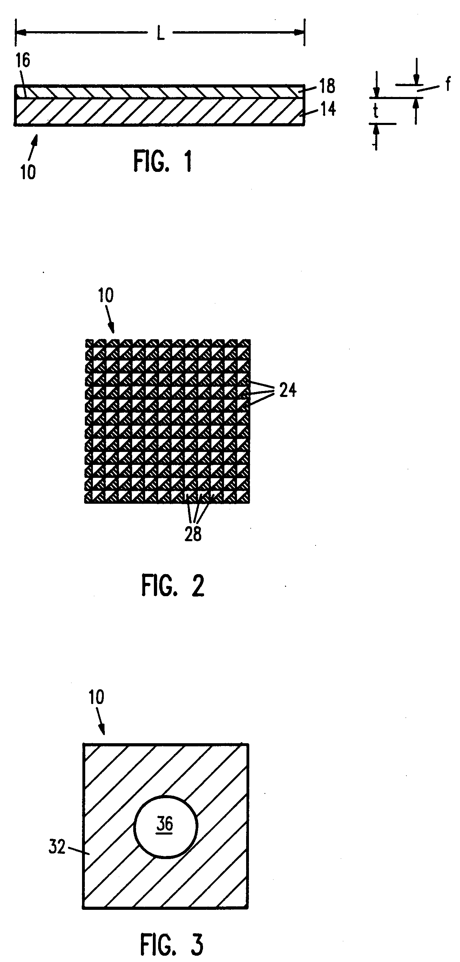

Fig. 1 is a schematic illustration of a coated membrane 10 used in the present invention. The membrane 10 comprises a substrate 14 and a coating 18 that is applied to a surface 16 of the substrate 14 to decrease the permeance of substrate 14 to oxygen and carbon dioxide. The surface 16 is a face of the substrate 14 through which oxygen and carbon dioxide must pass in order to flow through the substrate 14.

The substrate 14 may be any porous material having the following characteristics: (1) the permeability to oxygen should be in the range of 77,500 to 465,000,000 cc/m²-atmosphere-day (5,000 to 30,000,000 cc/100 in²-atmosphere-day); (2) the substrate 14 must be compatible with the coating 18, with an adhesive and with printing ink; and (3) the CO₂/O₂ permeance ratio of the substrate 14 can range from 1:1 to 8:1 with the preferred range being 1:1 to 4:1.

In the preferred embodiment, the substrate 14 is a microporous polypropylene film such as the film described by Antoon in U.S. Pat. No. 4,879,078 (i.e., comprised of a uniaxially oriented film comprised of a blend of 36% to 60% by weight of propylene homopolymer or propylene/ethylene copolymer, 36% to 60% of calcium carbonate filler based on the total weight of the polymer and filler, 0.10-2.5% by weight of calcium stearate, and 0-1.5% by weight of stabilizer). Although there is no preferred shape or size for the membrane 10, for reference purposes only, the substrate 14 typically has a length "L" in the range of 1.0 to 4 inches and a thickness "t" in the range of 5.0 to 10.0 mil. In general, any of the polymers described by Antoon in U.S. Pat. No. 4,879,078 can be used as the substrate 14, including the polyolefin homopolymer described therein.

Numerous other materials having the characteristics listed above may be used as the substrate 14, including the microporous polymer films described by Anderson in U.S. Pat. No. 4,842,875 that utilize a variety of inorganic fillers such as clay, barium sulfate, calcium carbonate, silica, diatomaceous earth and titania, and those using organic polymer fillers such as polyesters, polyamides and polystyrene.

It has also been observed that the substrate 14 may be comprised of a coated or uncoated paper having a weight in the range of 55 lbs. to 110 lbs. (e.g. the TEXAPRINT brand paper or white C1S latex impregnated paper manufactured by Kimberly-Clark). The clay coated paper should also have the permeance and compatibility characteristics listed above.

The coating 18 used on porous substrate 14 may be any material that substantially reduces the permeance of the substrate 14 to oxygen and carbon dioxide. Such materials are typically referred to as "barrier coatings" and include acrylic emulsion polymers, polyvinyl acetate homopolymer emulsions, and nitrocellulose polymers. For practical reasons, other desirable characteristics for the coating 18 include: water resistance, FDA approval for indirect food contact, and good film forming qualifies, namely the ability to form a continuous barrier coating 18 that can be applied to the substrate 14 without the formation of pin holes.

In the preferred embodiment, the coating 18 comprises an acrylic based polymer supplied by Johnson & Johnson under the trademark JONCYRYL 74F. ICI also markets an acceptable acrylic based polymer under the trademark NeoCryl which may be used as the coating 18. For reference purposes, the coating 18 generally has a coatweight of about 45% (i.e. about 45% by weight of solids), and a thickness "f" of about 0.25 to 0.5 mil. When paper is used as the substrate, porosity-reducing coating layer 18 may consist of the ink used to print information on the paper (i.e., experiments have shown that 80-lb clay-coated paper, for example, absorbs sufficient ink to reduce the permeance of the paper approximately 70%). The coating 18 may be applied to the substrate 14 in-line during a label-making process, or the substrate 14 may be coated off-line using standard printing processes.

In the label manufacturing process, a roll of substrate material is converted to pressure-sensitive adhesive labels. The conversion process involves running a roll of substrate material through a label manufacturer's printing press where the substrate material's top surface is printed with inks, the perimeter of the back surface is coated with adhesive, the labels are die-cut into desired label shapes, and the resulting master roll of labels is slit and wound into individual rolls of labels that are dispensed onto packages by the food packer.

Flexography is a widely used process for printing roll-fed pressure sensitive, self-adhesive labels. Flexography is a relief-printing technique. The first step is to make a flexible printing plate of rubber or plastic, with the print image area of the plate raised above the nonimage areas. The flexible plate is wrapped around a cylinder and placed in one of several printing stations of a flexographic press. Ink rollers on the press touch only the top surface of the raised image area of the flexo plate, and ink is transferred directly from the image areas of the plate to the substrate to be printed. After applying the ink to the top surface of the substrate, adhesive is applied to the back surface, and the labels are passed through a drying station, a die-cutting station, and wound onto a take-up roll.

Flexographic printing processes and gravure printing processes are described in the book "Printing Ink Handbook" compiled by Product and Technical Publications Committee, National Association of Printing Ink Manufacturers, Inc, 1976.

Fig. 2 illustrates a top view of the coated membrane 10 in which the coating 18 is applied as a repeating pattern of triangles using the flexographic process. In Fig. 2, the dark triangles 24 represent areas to which the coating 18 has been applied, while the light triangles 28 represent areas to which no coating has been applied. Therefore, the light triangles 28 represent the exposed surface 16 of the substrate 14.

Similarly, in Fig. 3 the coating 18 is represented by a dark area 32 and the exposed surface 16 of the substrate 14 is represented by the light area 36.

The coating patterns illustrated in Figs. 2 and 3 are illustrative of a virtually unlimited number of possible coating patterns. Any pattern that decreases the uncoated, permeable area of the substrate 14 is acceptable for use in the present invention.

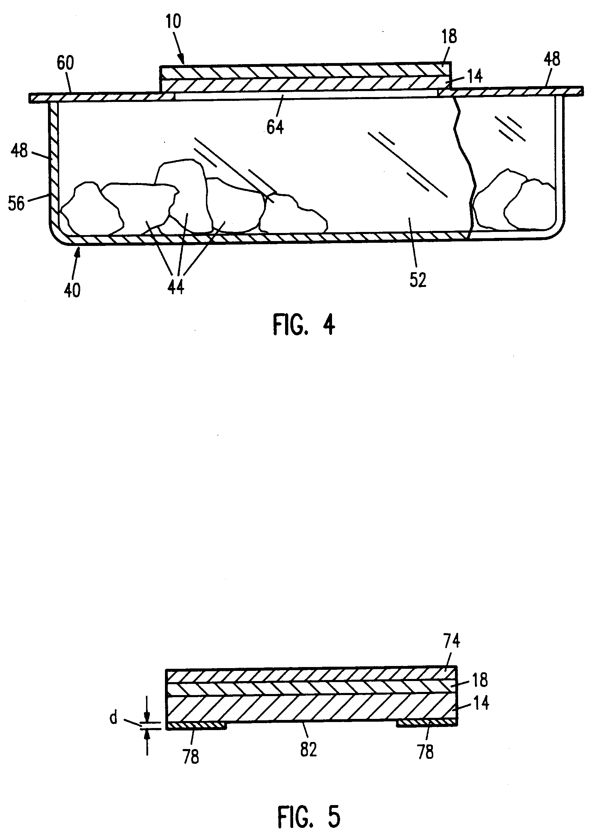

Fig. 4 illustrates a rigid container 40 for holding respiring produce 44. The term "respiring items" means items that respire in the biochemical sense of the word (i.e. that take in oxygen and give off carbon dioxide). The container 40 is comprised of a substantially impermeable packaging material 48 that surrounds the produce and holds it in a chamber 52 formed by the packaging material 48. The container 40 thus prevents any appreciable exchange of oxygen or carbon dioxide from within or outside container 40 except through the membrane 10.

In the preferred embodiment, the packaging material 48 is approximately 15-20 mil thick PVC. However, as is described in U.S. Pat. No. 4,842,875, any substantially impermeable material suitable for packaging produce, like glass, metal or a wide range of plastics (e.g. polyolefins and polystyrene) can be used for the packaging material 48. The term substantially impermeable is defined in U.S. Pat. No. 4,842,875 and means that no appreciable amount of oxygen can pass through the packaging material 48.

In Fig. 4, the container 40 is shown as having the shape of a basket with a bottom part 56 and a top part 60 that fit tightly together in a gas-tight manner. However, it should be appreciated that the container 40 can take other forms, such as a 3 mil thick polyethylene bag, having a 4.0% ethylene/vinylacetate content. The only requirements for the container 40 is that it be comprised of the substantially impermeable packaging material 48 and that it surround and hold the produce 44 in a chamber 52 so that the only passageway for oxygen to reach or leave the chamber 52 is through the membrane 10.

An aperture 64 exists in the container 40. The aperture 64 is an open region (hole) in the container 40 not covered by the packaging material 48. The membrane 10 is positioned over or about the aperture 64 so as to prevent gases such as oxygen and carbon dioxide from passing between the chamber 52 and the ambient atmosphere without passing through the membrane 10.

Fig. 5 illustrates a membrane 70 in which an ink layer 74 has been printed on top of the coating 18. The ink layer 74 is comprised of ink, water-based or otherwise, that is permeable to oxygen and carbon dioxide and functions merely to convey printed information, such as information about the produce 44, to the consumer. It should be appreciated that the relative positions of the substrate 14, the coating 18 and the ink layer 74 are not important. The ink layer 74 could be located between the substrate 14 and the coating 18 provided that coating 18 is transparent. Similarly, the ink layer 74 and the coating 18 could be on opposite sides of the substrate 14.

An adhesive 78 has been applied to the side of the substrate 14 not containing the ink layer 74. The finished label adhesive thickness "d" should be about 1.5 mil ± .3 mil. The primary function of the adhesive 78 is to attach the substrate 14 to the packaging material 48. Any pressure-sensitive label adhesive that is approved for indirect food contact can be used as the adhesive 78.

As is shown in Fig. 5, generally the adhesive 78 is applied around the outer edges of the substrate 14 so as to leave a region 82 on the substrate 14 that is not covered with adhesive 78. Since the adhesive areas 78 are attached to the packaging material 48, the part of the membrane 10 that is "over" the adhesive areas 78 is effectively impermeable to oxygen and carbon dioxide. Thus, only the part of the membrane 10 that is "over" the region 82 is a "breathable" area through which oxygen and carbon dioxide can pass.

Referring to Figs. 1-5, the functioning of the present invention can now be explained. The coating 18 is applied to the substrate 14 to decrease the permeance of substrate 14. In theory, for a substrate 14 having a fixed surface area, the permeance can be decreased by any amount between 0 and 100% by applying the coating 18 to an appropriate area of the substrate 14. It is thought that the coating 18 reduces the permeance of the substrate 14 by blocking the pores that exist in the substrate 14 that provide passageways for the flow of oxygen or carbon dioxide through the substrate 14.

By applying the coating 18 to the substrate 14 in a pattern that covers less than an entire surface of the substrate 14, the permeance of the substrate 14 can be reduced by a value less than 100%. For example, in Fig. 2, the dark triangles 24 cover approximately 80% of the surface area of the substrate 14 and therefore are expected to decrease the oxygen permeance by about 80%. Similarly, in Fig. 3, if the coating 18 covers about 50% of the surface area of the substrate 14, as represented by the dark area 32, then it is expected that the oxygen permeance of the coated membrane shown in Fig. 3 would be reduced by 50% compared to the permeance of the uncoated substrate 14.

In practice, a one-to-one relationship between the surface area coated and the reduction in effective permeance is not observed. Generally, the observed reduction in effective permeance is somewhat less than would be expected if the coating was a perfectly effective pore blocker. For example, in Example 1 (below), when a 50% pattern was used, a 31% decrease in permeance was observed.

A major advantage of the present invention is that by using patterns of differing surface areas, a single substrate 14, having a fixed oxygen permeance, can be used to prepare a variety of membranes 10 that have different permeances after the coating 18 is applied in different patterns and different coating weights and formulations. This is useful because in order to optimize the storage life of different types of produce 44, membranes 10 of varying oxygen permeance are required.

In the preferred embodiment, the coating 18 is applied to the substrate 14 using a flexographic process. In the flexographic process, a flexible rubber or plastic plate ("Flexo Plate") is made having an image of the coating pattern which is to be transferred to the substrate 14 (e.g. the patterns shown in Figs. 2 and 3). During the conversion, the coating material is transferred from the raised or image areas of the Flexo Plate to the substrate in the desired pattern.

In order to obtain reproducible results from run to run using the flexographic process, parameters such as the following should be controlled flexographic system used with the present invention): 1. The actual temperatures of the drier and adhesive should be maintained at a constant value (ink drying - 150 °F; adhesive pan temperature - 340 °F); 2. The viscosity of the coating should be maintained at a constant value (generally about 200-250 cp); 3. The Flexo Plate to substrate pressure should be uniform and the Flexo Plate should be cleaned periodically during the run; 4. The run speed should be maintained at a constant value (generally about 40 ft./min.); and 5. The analox roll should be cleaned periodically during the run - typically, about every 1000 impressions (a 300 line analox roll with a doctor blade has been used for all coating runs).

While the flexographic process is the presently preferred method of producing the membranes 10, it should be appreciated that any method of applying a coating to a substrate could be used, including rotogravure processes, letter press processes and rotary silkscreen processes.

### EXAMPLE 1

A roll of microporous polypropylene film obtained from Hercules, Inc., a calcium carbonate-filled uniaxially oriented polypropylene film having an oxygen permeance of approximately 565,000 cc/100 in²-atmosphere-day, was loaded onto the printing press and the following operations were performed on the press: 1. An acrylic coating (JONCYRYL 74F), having a proprietary chemical composition, was applied to the film (a copolymer substrate), using a flexographic plate; 2. Graphics and text were printed over the acrylic coating; 3. The adhesive was pattern-applied to the back surface of the substrate; 4. The coatings were dried in an oven at 150 degrees F; and 5. The labels were die-cut to the desired shape. This process was repeated a number of times using flexographic plates containing patterns for applying the acrylic coating to 25%, 50%, 75%, 90% and 100% of the surface area of the substrate label. The permeance of the various labels was measured using an oxygen permeance tester and the following data were obtained (permeance values are in units of cc/100 in²-atmosphere-day):

**TABLE 1.**

| Sample | Permeance* Range (x 1000) | Permeance* (mean ±std) (x 1000) | Average % Perm. Red. |
|---|---|---|---|
| Unconverted Film | 542-573 | 565 ±13 | -- |
| Converted Film | 517-540 | 529 ±10 | 6% |
| 25% Coating Coverage | 428-480 | 461 ±24 | 18% |
| 50% Coating Coverage | 354-432 | 388 ±38 | 31% |
| 75% Coating Coverage | 265-394 | 336 ±49 | 41% |
| 90% Coating Coverage | 63-113 | 78 ±23 | 86% |
| 100% Coating Coverage | 12-62 | 44 ±20 | 92% |

| | | | |
|---|---|---|---|
| * In units of cc/100 in²-atm-day. | | | |

### EXAMPLE 2

A roll of microporous polypropylene film obtained from Hercules, Inc., a calcium carbonate-filled uniaxially oriented polypropylene film (a copolymer substrate) having an oxygen permeance of approximately 477,000 cc/100 in²-atmosphere-day, was converted into acrylic-coated (JONCYRYL 74F) membrane labels as described in Example 1. However, the viscosity of the coating was varied as indicated in Table 2 by changing the ratio of acrylic emulsion to water in the coating mixture.

Examination of the data in Table 2 shows that the average reduction in permeance is dependent on the viscosity of the coating 18 so that this parameter may be controlled in order to achieve reproducible results.

**TABLE 2.**

| Sample | Permeance* Range (x 1000) | Permeance* (mean ±std) (x 1000) | Average % Perm. Red. |
|---|---|---|---|
| Unconverted Film | 455-498 | 477 ±19 | -- |
| 50% Coating Coverage; Viscosity = 200-250 cp | 263-329 | 299 ±22 | 37% |
| 50% Coating Coverage; Viscosity = 400 cp | 191-220 | 210 ±15 | 56% |
| 75% Coating Coverage; Viscosity = 200-250 cp | 120-195 | 158 ±22 | 67% |
| 75% Coating Coverage; Viscosity = 390 cp | 172-218 | 196 ±15 | 59% |

| | | | |
|---|---|---|---|
| * In units of cc/100 in²-atm-day. | | | |

### EXAMPLE 3

A roll of microporous polypropylene film obtained from Hercules, Inc., a calcium carbonate-filled uniaxially oriented polypropylene film (a copolymer substrate) having an oxygen permeance of approximately 567,000 cc/100 in²-atmosphere-day, was loaded onto a Dikon coater and the following operations were performed in succession on the coater: (1) an acrylic coating (NeoCryl), having a solids content of 25%, was applied to the surface of the film substrate using a trihelicoid gravure cylinder (180 cells/linear inch), (2) the film was passed through a 140 degrees F oven at a speed of 40 ft./min to dry the coating, and (3) the coated film was wound onto a take up roll. This process was repeated with a second roll of microporous film having an oxygen permeance of 548,000 cc/100 in²-atmosphere-day.

The data in Table 3 shows that the gravure printing method reduced the permeance of the films by approximately 41 to 48 percent.

**TABLE 3.**

| Film Samples | Uncoated Film Permeance* (x 1000) | Gravure-Coated Film Permeance* (x 1000) (mean ± std) | Average Perm. Red. |
|---|---|---|---|
| 6-175-01-00640-0608-58 | 567 | 294 ± 39 | 48.2% |
| 6-175-01-00640-0608-64 | 548 | 323 ± 53 | 41.1% |

| | | | |
|---|---|---|---|
| * In units of cc/100 in²-atm-day. | | | |

It should be noted that, while the conversion process of the present invention is described as a sequence of applying coating layers, the order of applying the layers is unimportant. It should also be noted that typically each layer must be allowed to dry before the next layer is applied.

## Claims

1. A container for retarding the maturation of respiring produce items having package means (40) for substantially surrounding a respiring item (44) and holding a given amount of said items in an internal chamber (52) formed by the package means, the package means being comprised of a material that is essentially impermeable to oxygen and carbon dioxide and which defines an aperture (64) therein,
at least one panel means comprising a porous membrane substrate (14) for providing a limited flow of carbon dioxide and oxygen between said internal chamber and the ambient atmosphere, and for regulating at least one of the levels, and the ratio, of oxygen and carbon dioxide inside the container, the panel means being positioned over the aperture (64) and in contact with said package means, such that any exchange of oxygen or carbon dioxide between the internal chamber and the ambient atmosphere substantially occurs through the porous membrane,
**characterized in that** the membrane (10) has a permeance to oxygen in the range of approximately 77.5 to 465,000 litres/m² - atmosphere - day (5,000 to 30,000,000 cc/100 in² - atmosphere - day), and
**characterized** by a porosity-reducing barrier coating (18) applied to less than the entire surface area of said membrane substrate (14) in a controlled manner so as to decrease the permeance of said membrane substrate to oxygen or carbon dioxide by more than fifteen per cent,
whereby in use the combination of the impermeable container and the partially coated porous membrane retards the maturation of the respiring produce items by allowing the concentration of oxygen and carbon dioxide inside the internal chamber to be maintained within a range of concentration reasonably optimal for the type and said given amount of said respiring produce items placed within the container.

2. A container according to claim 1, **characterized in that** the barrier coating (18) is applied to less than the entire surface area of the substrate (14), in a pattern defining coated areas (24) and uncoated areas (28).

3. A container according to claim 1 or claim 2, **characterized in that** the coat weight (thickness) of the barrier coating (18) is additionally increased in a controlled manner so as to decrease the permeance of said membrane substrate to oxygen or carbon dioxide to the desired amount.

4. A container according to any of claims 1 to 3, **characterized in that** the membrane substrate (14) comprises polymeric film, preferably polypropylene film.

5. A container according to claim 4, characterized in that the membrane substrate (14) comprises a propylene homopolymer.

6. A container according to claim 1, **characterized in that** the membrane substrate (14) comprises a uniaxially-oriented polymer film comprised of approximately 36% to 60% by weight of polyolefin polymer and 36% to 60% by weight of calcium carbonate filler based on the weight of the polymer and calcium carbonate.

7. A container according to claim 5, **characterized in that** the polyolefin polymer comprises a propylene/ethylene copolymer.

8. A container according to any of claims 1 to 6, **characterized in that** the membrane coating (18) comprises an acrylic polymer, polyvinylacetate, or nitrocellulose.

9. A container according to any of claims 1 to 8, **characterized in that** the coating (18) is applied to the membrane substrate (14) using a flexographic, rotogravure, or rotary silkscreen process.

10. A container according to claim 1, **characterized in that** the membrane substrate (14) comprises coated or uncoated paper having a weight in the range of 24.95kg to 49.90kg (55 lbs. to 110 lbs.).

11. A method of preserving, or retarding the maturation process of, respiring produce items (44) placed in a container (40) by regulating at least one of the levels, and the ratio, of oxygen and carbon dioxide inside the container, **characterized in that** the method permits the use of a single type of membrane substrate and a single type of substantially impermeable container (40) having an aperture (64) of fixed size defined therein to preserve, or retard, the maturation process of, different types and amounts of respiring items, the method comprising the steps of:
providing a substantially impermeable container (40) having an aperture (64) of fixed size defined therein;
providing a porous membrane substrate (14) having a first permeance rate to oxygen and carbon dioxide in the range of approximately 77.5 to 465,000 litres/m² - atmosphere - day (5,000 to 30,000,000 cc/100 in² - atmosphere - day);
reducing the first permeance rate of the substrate (14) to oxygen or carbon dioxide by more than fifteen per cent by applying a porosity-reducing barrier coating (18) to less than the entire surface area of the substrate (14) in a controlled manner thereby to form a porous membrane (10);
attaching the porous membrane (10) to the container over the aperture (64) such that any exchange of oxygen or carbon dioxide between the interior of the container and the ambient atmosphere substantially occurs through the partially coated porous membrane (10), so as to provide at least one of an optimal concentration of carbon dioxide and oxygen within the container when the particular type and amount of produce is located in the container.

12. The method according to claim 11, **characterized in that** the step of reducing the first permeance rate of the substrate (14) includes the step of applying the barrier coating (18) to less than the entire surface area of the substrate (14), in a pattern defining coated areas (24) and uncoated areas (28).

13. The method according to claim 11 or claim 12, **characterized in that** the membrane substrate (14) comprises a polymeric film, preferably a polypropylene film.

14. The method according to claim 13, **characrerized in that** the membrane substrate (14) comprises a propylene homopolymer.

15. The method according to claim 13, **characterized in that** the membrane substrate (14) comprises a calcium carbonate-filled uniaxially oriented polymer film comprised of approximately 36% to 60% by weight of polyolefin polymer and 36% to 60% by weight of calcium carbonate, based on the weight of the polymer and calcium carbonate.

16. The method according to claim 15, **characterized in that** the polyolefin polymer comprises a propylene/ethylene copolymer.

17. The method according to any one of claims 11 to 16, **characterized in that** the coating (18) comprises an acrylic polymer, polyvinylacetate or nitrocellulose.

18. The method according to any of claims 11 to 17, **characterized in that** the coating (18) is applied to the membrane substrate (14) by means of a flexographic, rotogravure or rotary silkscreen process.

19. The method according to claim 11 or claim 12, **characterized in that** the membrane substrate (14) comprises paper having a permeance to oxygen in the range of approximately 77.5 to 465,000 litres/m²-atmosphere-day (5,000 to 30,000,000 cc/100 in²-atmosphere-day).

## Patentansprüche

1. Behälter zur Verzögerung der Reifung von atmenden Erzeugnisgegenständen, mit einer Packungseinrichtung (40), um einen atmenden Gegenstand (44) im wesentlichen zu umgeben und eine gegebene Menge der Gegenstände in einer durch die Packungseinrichtung gebildeten inneren Kammer (52) festzuhalten, wobei die Packungseinrichtung aus einem Material besteht, das im wesentlichen undurchlässig für Sauerstoff und Kohlendioxid ist und in dem eine Öffnung (64) gebildet ist,
mindestens einer Platteneinrichtung, die ein poröses Membransubstrat (14) aufweist, um einen begrenzten Fluß von Kohlendioxid und Sauerstoff zwischen der inneren Kammer und der umgebenden Atmosphäre zu ermöglichen und um mindestens einen der Pegel und das Verhältnis von Sauerstoff und Kohlendioxid in dem Behälter zu regeln, wobei die Platteneinrichtung über der Öffnung (64) und im Kontakt mit der Packungseinrichtung angeordnet ist, so daß ein Austausch von Sauerstoff oder Kohlendioxid zwischen der inneren Kammer und der umgebenden Atmosphäre im wesentlichen durch die poröse Membran hindurch stattfindet,
**dadurch gekennzeichnet, daß** die Membran (10) eine Sauerstoffdurchlässigkeit im Bereich von ungefähr 77,5 bis 465.000 Liter/m² - Atmosphäre - Tag (5.000 bis 30.000.000 cc/100 in² - Atmosphäre - Tag) hat, und
**gekennzeichnet** durch eine porösitätsmindernde Barrierenbeschichtung (18), die auf eine kontrollierte Weise auf weniger als die gesamte Oberfläche des Membransubstrats (14) aufgebracht ist, um die Durchlässigkeit des Membransubstrats für Sauerstoff oder Kohlendioxid um mehr als fünfzehn Prozent zu vermindern,
wodurch im Gebrauch die Kombination aus dem undurchlässigen Behälter und der teilweise beschichteten porösen Membran die Reifung der atmenden Erzeugnisgegenstände verzögert, indem sie zuläßt, daß die Konzentration von Sauerstoff und Kohlendioxid in der inneren Kammer innerhalb eines Konzentrationsbereichs gehalten wird, der für die Art und die gegebene Menge der in den Behälter gelegten atmenden Erzeugnisgegenstände einigermaßen optimal ist.

2. Behälter nach Anspruch 1, **dadurch gekennzeichnet, daß** die Barrierenbeschichtung (18) in einem Muster aus beschichteten Bereichen (24) und unbeschichteten Bereichen (28) auf weniger als die gesamte Oberfläche des Substrats (14) aufgebracht ist.

3. Behälter nach Anspruch 1 oder Anspruch 2, **dadurch gekennzeichnet daß** das Beschichtungsgewicht (die Dicke) der Barrierenbeschichtung (18) auf kontrollierte Weise zusätzlich vergrößert ist, um die Durchlässigkeit des Membransubstrats für Sauerstoff oder Kohlendioxid auf den gewünschten Betrag zu vermindern.

4. Behälter nach einem der Ansprüche 1 bis 3, **dadurch gekennzeichnet daß** das Membransubstrat (14) Polymerfilm aufweist, vorzugsweise Polypropylenfilm.

5. Behälter nach Anspruch 4, **dadurch gekennzeichnet, daß** das Membransubstrat (14) ein Propylen-Homopolymer aufweist.

6. Behälter nach Anspruch 1, **dadurch gekennzeichnet, daß** das Membransubstrat (14) einen einachsig orientierten Polymerfilm aufweist, der aus ungefähr 36 bis 60 Gewichtsprozent Polyolefin-Polymer und 36 bis 60 Gewichtsprozent Kalziumkarbonat-Füllstoff auf der Basis des Gewichts des Polymers und des Kalziumkarbonats besteht.

7. Behälter nach Anspruch 5, **dadurch gekennzeichnet, daß** das Polyolefin-Polymer ein Propylen/Ethylen-Copolymer aufweist.

8. Behälter nach einem der Ansprüche 1 bis 6, **dadurch gekennzeichnet, daß** die Membranbeschichtung (18) ein Acryl-Polymer, Polyvinylacetat oder Nitrocellulose aufweist.

9. Behälter nach einem der Ansprüche 1 bis 8, **dadurch gekennzeichnet, daß** die Beschichtung (18) unter Verwendung eines Flexographie-, Tiefdruck- oder Rotationssiebdruck-Prozesses auf das Membransubstrat (14) aufgebracht ist.

10. Behälter nach Anspruch 1, **dadurch gekennzeichnet, daß** das Membransubstrat (14) beschichtetes oder unbeschichtetes Papier mit einem Gewicht im Bereich von 24,95 kg bis 49,90 kg (55 lbs. bis 110 lbs.) aufweist.

11. Verfahren zur Konservierung oder zur Verzögerung des Reifungsprozesses von in einen Behälter (40) gelegten atmenden Erzeugnisgegenständen (44) durch Regeln von mindestens einem der Pegel und des Verhältnisses von Sauerstoff und Kohlendioxid in dem Behälter, **dadurch gekennzeichnet, daß** das Verfahren die Verwendung einer einzigen Art von Membransubstrat und einer einzigen Art von im wesentlichen undurchlässigem Behälter (40) mit einer darin gebildeten Öffnung (64) fester Größe ermöglicht, um verschiedene Arten und Mengen von atmenden Gegenständen zu konservieren oder deren Reifungsprozeß zu verzögern, wobei das Verfahren folgende Verfahrensschritte aufweist:
einen im wesentlichen undurchlässigen Behälter (40) mit einer darin gebildeten Öffnung (64) fester Größe bereitzustellen,
ein poröses Membransubstrat (14) mit einem ersten Durchlässigkeitsgrad für Sauerstoff und Kohlendioxid im Bereich von ungefähr 77,5 bis 465.000 Liter/m² - Atmosphäre - Tag (5.000 bis 30.000.000 cc/100 in² - Atmosphäre - Tag) bereitzustellen,
den ersten Durchlässigkeitsgrad des Substrats (14) für Sauerstoff oder Kohlendioxid um mehr als fünfzehn Prozent zu vermindern, indem eine porösitätsmindernde Barrierenbeschichtung (18) auf eine kontrollierte Weise auf weniger als die gesamte Oberfläche des Substrats (14) aufgebracht wird, um eine poröse Membran (10) zu bilden,
die poröse Membran (10) über der Öffnung (64) am Behälter zu befestigen, so daß ein Austausch von Sauerstoff oder Kohlendioxid zwischen dem Inneren des Behälters und der umgebenden Atmosphäre im wesentlichen durch die teilweise beschichtete poröse Membran (10) hindurch stattfindet, um mindestens eine von einer optimalen Konzentration von Kohlendioxid und Sauerstoff im Behälter zu erzeugen, wenn sich die bestimmte Erzeugnisart und -menge im Behälter befindet.

12. Verfahren nach Anspruch 11, **dadurch gekennzeichnet, daß** der Verfahrensschritt zur Verminderung des ersten Durchlässigkeitsgrades des Substrats (14) den Verfahrensschritt umfaßt, die Barrierenbeschichtung (18) in einem Muster aus beschichteten Bereichen (24) und unbeschichteten Bereichen (28) auf weniger als die gesamte Oberfläche des Substrats (14) aufzubringen.

13. Verfahren nach Anspruch 11 oder Anspruch 12, **dadurch gekennzeichnet, daß** das Membransubstrat (14) einen Polymerfilm aufweist, vorzugsweise einen Polypropylenfilm.

14. Verfahren nach Anspruch 13, **dadurch gekennzeichnet, daß** das Membransubstrat (14) ein Propylen-Homopolymer aufweist.

15. Verfahren nach Anspruch 13, **dadurch gekennzeichnet, daß** das Membransubstrat (14) einen mit Kalziumkarbonat gefüllten einachsig orientierten Polymerfilm aufweist, der aus ungefähr 36 bis 60 Gewichtsprozent Polyolefin-Polymer und 36 bis 60 Gewichtsprozent Kalziumkarbonat auf der Basis des Gewichts des Polymers und des Kalziumkarbonats besteht.

16. Verfahren nach Anspruch 15, **dadurch gekennzeichnet, daß** das Polyolefin-Polymer ein Propylen/Ethylen-Copolymer aufweist.

17. Verfahren nach einem der Ansprüche 11 bis 16, **dadurch gekennzeichnet, daß** die Beschichtung (18) ein Acryl-Polymer, Polyvinylacetat oder Nitrocellulose aufweist.

18. Verfahren nach einem der Ansprüche 11 bis 17, **dadurch gekennzeichnet, daß** die Beschichtung (18) mittels eines Flexographie-, Tiefdruck- oder Rotationssiebdruck-Prozesses auf das Membransubstrat (14) aufgebracht wird.

19. Verfahren nach Anspruch 11 oder Anspruch 12, **dadurch gekennzeichnet, daß** das Membransubstrat (14) Papier mit einer Sauerstoffdurchlässigkeit im Bereich von ungefähr 77,5 bis 465.000 Liter/m² - Atmosphäre - Tag (5.000 bis 30.000. 000 cc/100 in² - Atmosphäre - Tag) aufweist.

## Revendications

1. Conteneur pour retarder la maturation d'articles en produit respirant ayant un emballage (40) destiné à entourer pratiquement un article respirant (44) et maintenir une quantité donnée dedits articles dans une chambre intérieure (52) formée par l'emballage, l'emballage étant constitué d'un matériau qui est essentiellement imperméable à l'oxygène et au dioxyde de carbone et qui définit une ouverture (64) dans celui-ci,
au moins un panneau comportant un substrat de membrane poreuse (14) destiné à fournir un écoulement limité de dioxydc de carbone et d'oxygène entre ladite chambre intérieure et l'atmosphère ambiant, et à réguler au moins un des niveaux, et le rapport, de l'oxygène et du dioxyde de carbone à l'intérieur du conteneur, le panneau étant positionné sur l'ouverture (64) et en contact avec ledit emballage, de sorte que tout échange d'oxygène ou de dioxyde de carbone entre la chambre intérieure et l'atmosphère ambiant survient pratiquement à travers la membrane poreuse,
caractérisé en ce que la membrane (10) a une perméance à l'oxygène située dans la plage allant d'approximativement 77,5 à 465000 litres/m²-atmosphère-jour (5000 à 30000000 cc/100 pouces carrés-atmosphère-jour), et caractérisé en ce qu'un revêtement (18) formant barrière réduisant la porosité est appliqué sur une surface plus petite que la surface complète dudit substrat de membrane (14) d'une manière commandée pour diminuer la perméance dudit substrat de membrane à l'oxygène ou au dioxyde de carbone de plus de quinze pourcent,
de sorte qu'en utilisation la combinaison du conteneur imperméable et de la membrane poreuse partiellement revêtue retarde la maturation des articles en produit respirant en permettant que la concentration en oxygène et en dioxyde de carbone à l'intérieur de la chambre intérieure soit maintenue dans une plage de concentrations raisonnablement optimale pour le type et la quantité donnée d'articles en produit respirant placés dans le conteneur..

2. Conteneur selon la revendication 1, caractérisé en ce que le revêtement formant barrière (18) est appliqué sur une surface plus petite que la surface complète du substrat (14), selon un motif définissant des surfaces revêtues (24) et des surfaces non-revêtues (28).

3. Conteneur selon la revendication 1 ou 2, caractérisé en ce que le poids de revêtement (épaisseur) du revêtement formant barrière (18) est accru de plus d'une manière commandée pour diminuer la perméance dudit substrat de membrane à l'oxygène ou au dioxyde de carbone jusqu'à une valeur voulue.

4. Conteneur selon l'une quelconque des revendications 1 à 3, caractérisé en ce que le substrat de membrane (14) est constitué d'un film en polymère, de préférence un film de polypropylène.

5. Conteneur selon la revendication 4, caractérisé en ce que le substrat de membrane (14) est constitué d'un homopolymère de propylène.

6. Conteneur selon la revendication 1, caractérisé en ce que le substrat de membrane (14) est constitué d'un film de polymère uinaxialement orienté constitué d'approximativement 36 à 60 % en poids de polymère de polyoléfine et de 36 % à 60 % en poids d'une charge de carbonate de calcium, sur la base du poids du polymère et du carbonate de calcium.

7. Conteneur selon la revendication 5, caractérisé en ce que le polymère de polyoléfine est constitué d'un copolymère de propylène/éthylène.

8. Conteneur selon l'une quelconque des revendications 1 à 6, caractérisé en ce que le revêtement de membrane (18) est constitué d'un polymère acrylique, d'un polyvinyle acétate ou de nitrocellulose.

9. Conteneur selon l'une quelconque des revendications 1 à 8, caractérisé en ce que le revêtement (18) est appliqué sur le substrat de membrane (14) en utilisant un traitement flexographique, de rotogravure, ou à écran de soie rotatif.

10. Conteneur selon la revendication 1, caractérisé en ce que le substrat de membrane (14) est constitué d'un papier revêtu ou non-revêtu ayant un poids situé dans la plage allant de 24,95 kg à 49,90 kg (55 livres à 110 livres).

11. Procédé de préservation, ou de retardement du processus de maturation d'articles en produit respirant (44) placés dans un conteneur (40) en régulant au moins un des niveaux, et du rapport, d'oxygène et de dioxyde de carbone à l'intérieur du conteneur, caractérisé en ce que le procédé permet d'utiliser un seul type de substrat de membrane et un seul type de conteneur pratiquement imperméable (40) ayant une ouverture (64) de dimension fixée définie dans celui-ci pour préserver, ou retarder, le processus de maturation d'articles respirant de différents types et de différentes quantités, le procédé comportant les étapes consistant à:
fournir un conteneur pratiquement imperméable (40) ayant une ouverture (64) de dimension fixée définie dans celui-ci,
fournir un substrat de membrane poreuse (14) ayant un premier taux de perméance à l'oxygène et au dioxyde de carbone situé dans la plage allant approximativement de 77,5 à 465000 litres/m²-atmosphère-jour (5000 à 30000000 cc/100 pouces carrés-atmosphère-jour),
réduire le premier taux de perméance du substrat (14) à l'oxygène ou au dioxyde de carbone de plus de quinze pourcent en appliquant un revêtement formant barrière réduisant la porosité (18) sur une surface plus petite que la surface complète du substrat (14) d'une manière commandée pour former ainsi une membrane poreuse (10),
fixer la membrane poreuse (10) sur le conteneur par-dessus l'ouverture (64) de sorte que tout échange d'oxygène ou de dioxyde de carbone entre l'intérieur du conteneur et l'atmosphère ambiant survient pratiquement à travers la membrane poreuse partiellement revêtue (10), de manière à fournir au moins une parmi les concentrations optimales en dioxyde de carbone et oxygène dans le conteneur lorsque le type particulier et la quantité de produit sont situés dans le conteneur.

12. Procédé selon la revendication 11, caractérisé en ce que l'étape consistant à réduire le premier taux de perméance du substrat (14) comporte l'étape consistait à appliquer un revêtement formant barrière (18) sur une surface plus petite que la surface complète du substrat (14), selon un motif définissant des surfaces revêtues (24) et des surfaces non-revêtues (28).

13. Procédé selon la revendication 11 ou 12, caractérisé en ce que le substrat de membrane (14) est constitué d'un film en polymère, de préférence un film de polypropylène.

14. Procédé selon la revendication 13, caractérisé en ce que le substrat de membrane (14) est constitué d'un homopolymère de propylène.

15. Procédé selon la revendication 13, caractérisé en ce que le substrat de membrane (14) est constitué d'un film de polymère uniaxialement orienté à charge de carbonate de calcium, constitué approximativement de 36 % à 60 % en poids de polymère de polyoléfine et de 36 % à 60 % en poids de carbonate de calcium, sur la base du poids du polymère et du carbonate de calcium.

16. Procédé selon la revendication 15, caractérisé en ce que le polymère de polyoléfine est constitué d'un copolymère de propylène/éthylène.

17. Procédé selon l'une quelconque des revendications 11 à 16, caractérisé en ce que le revêtement (18) est constitué d'un polymère acrylique, de polyvinyle acétate ou de nitrocellulose.

18. Procédé selon l'une quelconque des revendications 11 à 17, caractérisé en ce que le revêtement (18) est appliqué sur le substrat de membrane (14) par l'intermédiaire d'un traitement flexographique, de rotogravure, ou à écran de soie rotatif.

19. Procédé selon la revendication 11 ou 12, caractérisé en ce que le substrat de membrane (14) est constitué d'un papier ayant une perméance à l'oxygène située dans la plage allant approximativement de 77,5 à 465000 litres/m²-atmosphère-jour (5000 à 30000000 cc/100 pouces carrés-atmosphère-jour).
